# EUROPEAN PATENT APPLICATION

(11) **EP 4 576 879 A1**
(43) Date of publication of application: **25.06.2025**
(21) Application number: 22955405.0
(22) Date of filing: 19.08.2022
(51) Int. Cl.: H04W 48/08

(54) **INFORMATION INDICATION METHOD, AND ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/113712
(87) International publication number: WO 2024/036625

(57) **Abstract**

The embodiments of the present disclosure belong to the technical field of mobile communications. Provided are an information indication method, and an electronic device and a storage medium. The information indication method is applied to a station device. The method comprises: determining a first radio frame, wherein the first radio frame comprises first indication information, and the first indication information indicates whether a station device needs to be polled during a sensing measurement process (101); and sending the first radio frame (102). A mode for supporting a poll mechanism is provided in the embodiments of the present disclosure.

## Description

### TECHNICAL FIELD

Embodiments of the present disclosure relate to the field of mobile communication technology, and in particular, to an information indicating method, an electronic device and a storage medium.

### BACKGROUND

With the rapid development of mobile communication technology, the wireless fidelity (Wi-Fi) technology has made great progress in terms of transmission rate, throughput or the like. Currently, what are studied in the Wi-Fi technology are for example 320 Mhz bandwidth transmission, multi-band aggregation and collaboration or the like, and the main application scenarios of the Wi-Fi technology are for example video transmission, augmented reality (AR), virtual reality (VR) or the like.

Specifically, the multi-band aggregation and collaboration refers to that the communication between devices is performed in 2.4GHz, 5.8GHz, 6GHz and other frequency bands at the same time. As for the scenario where the communication between devices is performed in a plurality of frequency bands at the same time, a new media access control (MAC) mechanism may be defined for management thereof. In addition, the multi-band aggregation and collaboration is expected to support low-latency transmission.

Currently, the multi-band aggregation and collaboration technology supports a maximum bandwidth of 320MHz (160MHz+160MHz), and may also support a bandwidth of 240MHz (160MHz+80MHz) and other bandwidths supported by an existing standard.

The Wi-Fi technology studied currently may support a wireless local area network (WLAN) sensing technology, which for example may be applied in scenarios such as position detection, proximity detection and presence detection in a dense environment (e.g., home and company environments). For a WLAN sensing measurement, the WLAN sensing type usually includes a triggered based (TB) sounding sensing manner and a Non-TB based sensing manner. The TB sensing measurement process includes a poll stage, therefore, a manner supporting the poll mechanism is expected to achieve the TB sensing measurement.

### SUMMARY

Embodiments of the present disclosure provide an information indicating method, an electronic device and a storage medium so as to provide a manner supporting the poll mechanism.

In an aspect, an embodiment of the present disclosure provides an information indicating method applied to a station, including:
determining a first radio frame, wherein the first radio frame includes first indication information, and the first indication information indicates whether or not the station is to be polled during a sensing measurement process; and
sending the first radio frame.

In another aspect, an embodiment of the present disclosure provides an information indicating method applied to an access point, including:
receiving a first radio frame, wherein the first radio frame includes first indication information, and the first indication information indicates whether or not a station is to be polled during a sensing measurement process; and
performing a polling process based on the first indication information.

In another aspect, an embodiment of the present disclosure provides an electronic device being a station, including:
a determining module, configured to determine a first radio frame, wherein the first radio frame includes first indication information, and the first indication information indicates whether or not the station is to be polled during a sensing measurement process; and
a sending module, configured to send the first radio frame.

In another aspect, an embodiment of the present disclosure provides an electronic device being an access point, including:
a receiving module, configured to receive a first radio frame, wherein the first radio frame includes first indication information, and the first indication information indicates whether or not a station is to be polled during a sensing measurement process; and
a performing module, configured to perform a polling process based on the first indication information.

An embodiment of the present disclosure further provides an electronic device, including a memory, a processor and a computer program stored in the memory and runnable on the processor, and the processor, when executing the program, implements the method according to one or more of the embodiments of the present disclosure.

An embodiment of the present disclosure further provides a computer-readable storage medium having a computer program stored thereon, and the computer program, when being executed by a processor, implements the method according to one or more of the embodiments of the present disclosure.

In the embodiments of the present disclosure, a first radio frame is determined, in which the first radio frame includes first indication information, and the first indication information indicates whether or not the station is to be polled during a sensing measurement process; and the first radio frame is sent to indicate to an AP whether or not the station is to be polled. It does not need to poll the station which does not need to be polled, which saves resources.

Additional aspects and advantages of the embodiments of the present disclosure will be partially given in the following description, which will become apparent from the following description or be learned through the practice of the present disclosure.

### BRIEF DESCRIPTION OF THE DRAWINGS

In order to more clearly illustrate the technical solutions of the embodiments of the present disclosure, the accompanying drawings, which are to be used in the description of the embodiments of the present disclosure, will be briefly introduced below. Obviously, the accompanying drawings in the following description are only some of the embodiments of the present disclosure, and a person skilled in the art may obtain other drawings based on these drawings without creative labor.
FIG. 1 illustrates a flowchart of an information indicating method according to an embodiment of the present disclosure;
FIG. 2 illustrates a schematic diagram of a first example according to an embodiment of the present disclosure;
FIG. 3 illustrates another schematic diagram of the first example according to an embodiment of the present disclosure;
FIG. 4 illustrates yet another schematic diagram of the first example according to an embodiment of the present disclosure;
FIG. 5 illustrates a schematic diagram of a second example according to an embodiment of the present disclosure;
FIG. 6 illustrates another flowchart of an information indicating method according to an embodiment of the present disclosure;
FIG. 7 illustrates yet another flowchart of an information indicating method according to an embodiment of the present disclosure;
FIG. 8 illustrates a schematic structure diagram of an electronic device according to an embodiment of the present disclosure;
FIG. 9 illustrates another schematic structure diagram of an electronic device according to an embodiment of the present disclosure; and
FIG. 10 illustrates yet another schematic structure diagram of an electronic device according to an embodiment of the present disclosure.

### DETAILED DESCRIPTION

The term "and/or" in the embodiments of the present disclosure describes an association relationship between associated objects, indicating that three relationships may exist, for example, A and/or B may indicate: A alone, both A and B, and B alone. The character "/" generally indicates that the associated objects before and after the character are in an "or" relationship.

The term "a plurality of ......" in the embodiments of the present disclosure refers to two or more, and other quantifiers have similar meanings.

Exemplary embodiments will be described in detail herein, examples of which are shown in the accompanying drawings. When the following description relates to the accompanying drawings, unless otherwise indicated, the same reference numbers in different drawings indicate the same or similar elements. The implementations described in the following exemplary embodiments do not represent all implementations consistent with the present disclosure. Rather, they are merely examples of devices and methods consistent with some aspects of the present disclosure as detailed in the appended claims.

The term used in the present disclosure is only for describing a particular embodiment and is not intended to limit the present disclosure. The singular forms such as "a", "an", "said" and "the" used in the present disclosure and the appended claims are also intended to encompass plural forms, unless clearly indicated otherwise herein. It is also to be understood that the term "and/or" as used herein refers to and encompasses any or all possible combinations of one or more of the associated listed items.

It is to be understood that while the terms first, second, third or the like may be used in the present disclosure to describe various information, such information may not be limited by these terms. These terms are used only to distinguish the same type of information from one another. For example, without departing from the scope of the present disclosure, first information may also be referred to as second information, and similarly, second information may be referred to as first information. Depending on the context, for example, the term "if" as used herein may be interpreted as "while ......" or "when ......" or "in response to determining ......".

The technical solution in the embodiments of the present disclosure will be described clearly and completely hereinafter in conjunction with the accompanying drawings in the embodiments of the present disclosure. Obviously, the described embodiments are only a part but not all of the embodiments of the present disclosure. Based on the embodiments in the present disclosure, all other embodiments obtained by a person skilled in the art without making creative labor fall within the protection scope of the present disclosure.

Embodiments of the present disclosure provide an information indicating method, an electronic device and a storage medium to provide a manner supporting the poll mechanism

The method and the device are based on the same application concept. Since the method and the device solve problems on similar principles, the implementations of the device and the method may be referred to each other, and the repetition thereof will not be described.

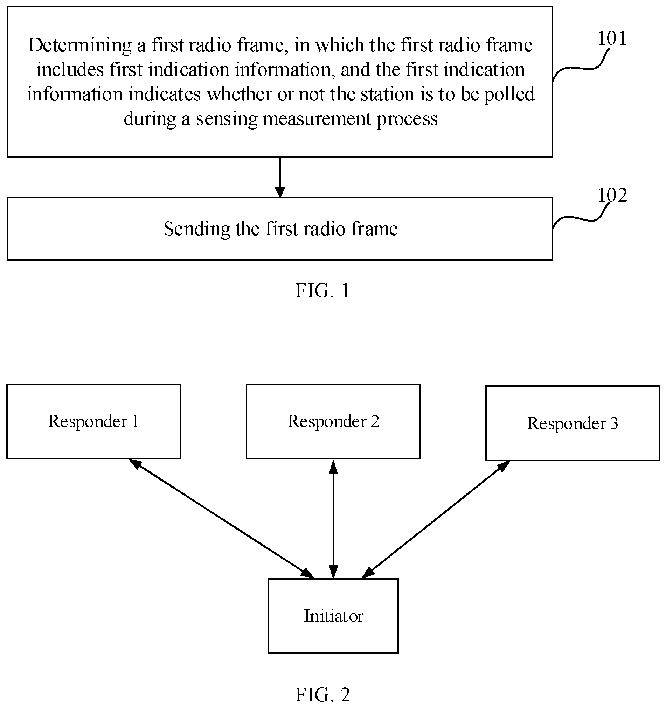

As shown in FIG. 1, an embodiment of the present disclosure provides an information indicating method, optionally the method may be applied to a station, and the method may include the following steps.

In step 101, a first radio frame is determined, in which the first radio frame includes first indication information, and the first indication information indicates whether or not the station is to be polled during a sensing measurement process.

As a first example, referring to FIGS. 2 to 4, a WLAN sensing architecture applied by the information indicating method provided by the embodiment of the present disclosure and a WLAN sensing process thereof are described firstly.

FIG. 2 illustrates a schematic architecture diagram of a WLAN sensing (process) in which a sensing initiator (or initiator) initiates a WLAN sensing (e.g., initiates a WLAN sensing session), and there may be a plurality of sensing responders (or sensing receivers) or responders responding thereto, for example, responder 1, responder 2, and responder 3 in FIG. 2. When the sensing initiator initiates the WLAN sensing, a plurality of associated or unassociated sensing responders of the WLAN sensing may respond thereto.

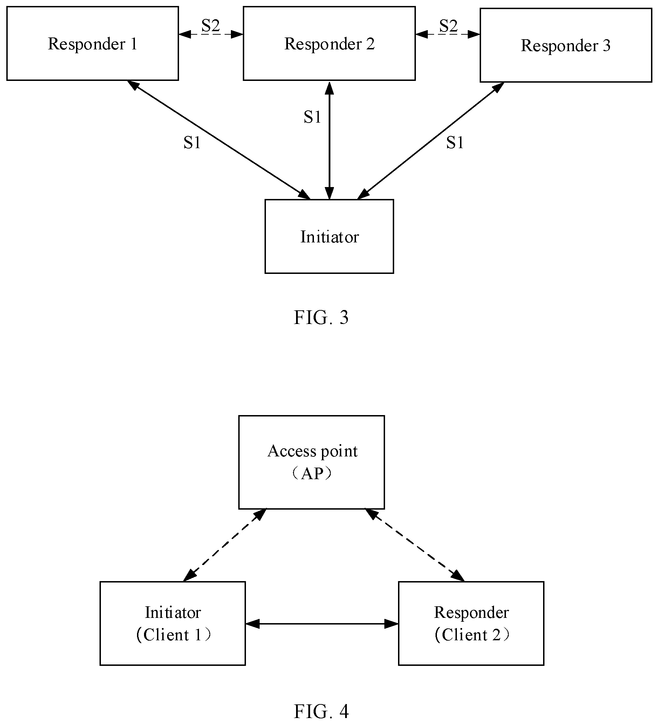

Referring to FIG. 3, the sensing initiator and the sensing responder communicate with each other via a communication connection, such as a communication connection S1 shown, and the sensing responders communicate with each other via a communication connection S2.

Each sensing initiator may be a client, and each sensing responder (in this example, i.e., the sensing responders 1 to 3) may be a station (STA) or an access point (AP). In addition, the STA and the AP may act as a plurality of roles in the WLAN sensing process. For example, in the WLAN sensing process, the STA may also act as a sensing initiator, which may be a sensing transmitter, a sensing receiver, or both, or neither. In the WLAN sensing process, the sensing responder may also be a sensing transmitter, a sensing receiver, or both.

As another architecture, as shown in FIG. 4, the sensing initiator and sensing responder may also both be clients, and may communicate with each other by connecting to a same access point (AP). In FIG. 4, the client 1 is a sensing initiator, and the client2 is a sensing responder.

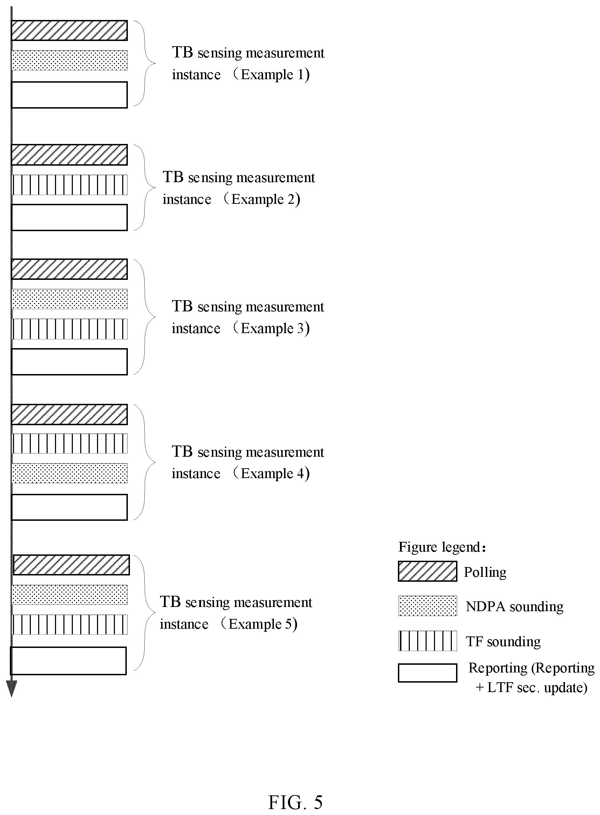

The WLAN sensing process usually includes a triggered based sounding (TB) manner and a Non-TB based sensing manner. Specifically, the TB sensing measurement manner is a manner in which the AP is the initiator or transmitter, and the Non-TB sensing measurement manner is a manner in which the STA is the initiator or transmitter. As a second example, the TB sensing measurement process is illustrated in FIG. 5. FIG. 5 illustrates a plurality of sensing measurement instances of the sensing measurement in the TB sensing measurement process. In examples 1 to 5, each sensing measurement process includes polling, sounding and reporting (reporting + LTF sec. update) processes. In each example, the sounding may include only NDPA sounding or only TF sounding or both thereof.

The station determines a first radio frame, the first radio frame includes first indication information, and the first indication information indicates whether or not the station is to be polled during a sensing measurement process, so that the AP may obtain whether or not the station is to be polled.

If the station is to be polled, the AP may send a sensing trigger poll frame to the station in the poll stage, so that the AP may obtain that the station can participate in a subsequent sensing measurement, such as NDPA sounding and/or TF sounding.

If the station is not to be polled, e.g., some STAs can participate in the NDPA sounding and/or TF sounding but are not to be polled, the AP may not allocate an uplink resource or downlink resource for the sensing measurement to the station in the sensing measurement stage. If the station is not to be polled and does not indicate this to the AP, the AP may still poll the station to allocate the uplink resource or downlink resource for the sensing measurement to the station, resulting in a waste of network resources.

Therefore, in an embodiment of the present disclosure, the first radio frame is determined during the sensing measurement setup or sensing session setup process, and the first radio frame indicates whether or not the AP is to be polled, in order to improve the TB sensing measurement mechanism.

Optionally, the first radio frame may be a probe request frame, a pre-associated security negotiation (PASN) request frame or a sensing by proxy (SBP) request frame.

The first indication information may be indicated by a bit, for example, setting "1" to identify that the station is to be polled, and setting "0" to identify that the station is not to be polled.

It is to be understood that even if the first indication is set to be "0", the AP may carry the STA identification for polling in the sensing polling frame.

In step 102, the first radio frame is sent.

The station sends the first radio frame to the access point, so that the access point AP may obtain that the station can participate in a subsequent sensing measurement and determine whether the station is to be polled based on the first indication information.

In the embodiments of the present disclosure, the station determines a first radio frame, in which the first radio frame includes first indication information, and the first indication information indicates whether or not the station is to be polled during a sensing measurement process; and the station sends the first radio frame to indicate to an AP whether or not the station is to be polled. It does not need to poll the station which does not need to be polled, which saves resources. The embodiments of the present disclosure provide a manner supporting the poll mechanism.

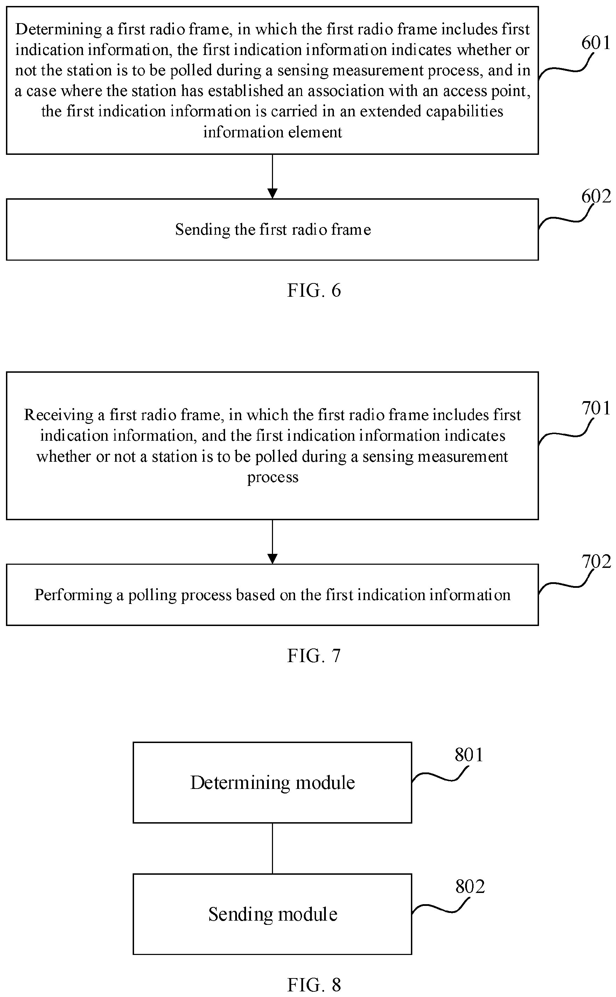

As shown in FIG. 6, an embodiment of the present disclosure provides an information indicating method, optionally the method may be applied to a station, and the method may include the following steps.

In step 601, a first radio frame is determined, in which the first radio frame includes first indication information, and the first indication information indicates whether or not the station is to be polled during a sensing measurement process.

In a case where the station has established an association with an access point, the first indication information is carried in an extended capabilities information element.

The WLAN sensing architecture applied by the information indicating method provided by the embodiment of the present disclosure and the WLAN sensing process thereof may refer to the above first example, and the TB sensing measurement process may refer to the above second example, which is not repeated herein.

In a case where the station has established an association with the access point (for example, they have established a communication connection), the station determines the first radio frame, the first radio frame includes first indication information, the first indication information is carried in the extended capabilities information element, and the first indication information indicates whether or not the station is to be polled during the sensing measurement process, so that the AP may obtain whether to poll the station or not.

If the station is to be polled, the AP may send a sensing trigger poll frame to the station in the poll stage, so that the AP may obtain that the station can participate in a subsequent sensing measurement, such as NDPA sounding and/or TF sounding.

If the station is not to be polled, e.g., some STAs can participate in the NDPA sounding and/or TF sounding but are not to be polled, the AP may not allocate an uplink resource or downlink resource for the sensing measurement to the station in the sensing measurement stage. If the station is not to be polled and does not indicate this to the AP, the AP may still poll the station to allocate the uplink resource or downlink resource for the sensing measurement to the station, resulting in a waste of network resources.

Therefore, in an embodiment of the present disclosure, the first radio frame is determined during the sensing measurement setup or sensing session setup process, and the first radio frame indicates whether or not the AP is to be polled, in order to improve the TB sensing measurement mechanism.

Optionally, the first radio frame may be a probe request frame. The first indication information may be indicated by a bit, for example, setting "1" to identify that the station is to be polled, and setting "0" to identify that the station is not to be polled.

It is to be understood that even if the first indication is set to be "0", the AP may carry the STA identification for polling in the sensing polling frame.

In step 602, the first radio frame is sent.

The station sends the first radio frame to the access point, so that the access point AP may obtain that the station can participate in a subsequent sensing measurement and determine whether the station is to be polled based on the first indication information.

An embodiment of the present disclosure also provides an information indicating method, optionally the method may be applied to a station, and the method may include the steps of:
determining a first radio frame, wherein the first radio frame includes first indication information, and the first indication information indicates whether or not the station is to be polled during a sensing measurement process; and
sending the first radio frame during a pre-associated security negotiation process in a case where the station has not established an initial association with an access point.

In the case where the station has not established the initial association with the access point, the station determines the first radio frame, and sends the first radio frame during the pre-associated security negotiation process. The first radio frame includes the first indication information, and the first indication information indicates whether or not the station is to be polled during the sensing measurement process, so that the AP may obtain whether to poll the station or not.

If the station is to be polled, the AP may send a sensing trigger poll frame to the station in the poll stage, so that the AP may obtain that the station can participate in a subsequent sensing measurement, such as NDPA sounding and/or TF sounding.

If the station is not to be polled, e.g., some STAs can participate in the NDPA sounding and/or TF sounding but are not to be polled, the AP may not allocate an uplink resource or downlink resource for the sensing measurement to the station in the sensing measurement stage. If the station is not to be polled and does not indicate this to the AP, the AP may still poll the station to allocate the uplink resource or downlink resource for the sensing measurement to the station, resulting in a waste of network resources.

Therefore, in an embodiment of the present disclosure, the first radio frame is determined during the sensing measurement setup or sensing session setup process, and the first radio frame indicates whether or not the AP is to be polled, in order to improve the TB sensing measurement mechanism.

Optionally, the first radio frame may be a pre-associated security negotiation request frame.

The first indication information may be indicated by a bit, for example, setting "1" to identify that the station is to be polled, and setting "0" to identify that the station is not to be polled.

It is to be understood that even if the first indication is set to be "0", the AP may carry the STA identification for polling in the sensing polling frame.

An embodiment of the present disclosure also provides an information indicating method, optionally the method may be applied to a station and the method may include the steps of:
determining a first radio frame, wherein the first radio frame includes first indication information, and the first indication information indicates whether or not the station is to be polled during a sensing by proxy (SBP) process; and
sending the first radio frame.

When acting as a sensing initiator or sensing transmitter, the STA does not have the capability to communicate with a plurality of receivers simultaneously, and thus a proxy end (e.g., an AP) may proxy the STA to perform triggered based sounding (TB) sensing measurement in order to improve the sensing measurement efficiency. The TB sensing measurement includes NDPA sounding and/or TF sounding, the specific process of which may refer to the aforementioned second example, which will not be repeated herein.

During the SBP process, the station may participate in a subsequent sensing measurement process initiated by the AP proxy. The station determines the first radio frame and sends the first radio frame, the first radio frame includes the first indication information, and the first indication information indicates whether or not the station is to be polled during a subsequent sensing measurement process, so that the AP may obtain whether to poll the station or not.

Optionally, the first radio frame includes an SBP request frame.

An embodiment of the present disclosure also provides an information indicating method, optionally the method may be applied to a station, and may include the following steps:
receiving a second radio frame during a sensing measurement setup process, wherein the second radio frame includes second indication information, and the second indication information indicates the station to send first indication information to an access point;
determining a first radio frame, wherein the first radio frame includes the first indication information, and the first indication information indicates whether or not the station is to be polled during a sensing by proxy (SBP) process; and
sending the first radio frame.

During the sensing measurement setup process, the AP may pre-indicate the station in the second radio frame to inform the AP regarding whether or not the station is to be polled, i.e., indicate, via the second indication information, the station to send the first indication information. For example, if the second indication information is 1, the station sends the first indication information; and if the second indication information is 0, the station does not send the first indication information.

When the station receives the second indication information and the second indication information indicates the station to send the first indication information to the access point, the station determines the first radio frame and carries the first indication information in the first radio frame and sends the same to the AP.

Optionally, in an embodiment of the present disclosure, the first indication information is carried in a sensing measurement setup parameter information element of the first radio frame; and/or the second indication information is carried in a sensing measurement setup parameter information element of the second radio frame.

In an optional embodiment, the first radio frame includes a sensing measurement setup response frame; and/or the second radio frame includes a sensing measurement setup request frame.

Optionally, in an embodiment of the present disclosure, the first radio frame includes a sensing measurement setup query frame, and the first indication information may be indicated by a bit, for example, setting "1" to identify that the station is to be polled, and setting "0" to identify that the station is not to be polled.

In the embodiments of the present disclosure, a first radio frame is determined, in which the first radio frame includes first indication information, and the first indication information indicates whether or not the station is to be polled during a sensing measurement process; and the first radio frame is sent to indicate to an AP whether or not the station is to be polled. It does not need to poll the station which does not need to be polled, which saves resources.

Referring to FIG. 7, an embodiment of the present disclosure provides an information indicating method, optionally the method may be applied to a network device, the network device may be an access point, and the method may include the following steps.

In step 701, a first radio frame is received, in which the first radio frame includes first indication information, and the first indication information indicates whether or not a station is to be polled during a sensing measurement process.

The WLAN sensing architecture applied by the information indicating method provided by the embodiment of the present disclosure and the WLAN sensing process thereof may refer to the above first example, and the TB sensing measurement process may refer to the above second example, which is not repeated herein.

The AP receives the first radio frame, the first radio frame includes the first indication information, and the first indication information indicates whether or not the station is to be polled during the sensing measurement process, so that the AP may obtain whether to poll the station or not.

In step 702, a polling process is performed based on the first indication information.

If the first indication information indicates that the station is to be polled, the AP may send a sensing trigger poll frame to the station during the poll stage, so that the AP may obtain that the station can participate in a subsequent sensing measurement, such as NDPA sounding and/or TF sounding.

If the first indication information indicates that the station is not to be polled, e.g., some STAs can participate in the NDPA sounding and/or TF sounding but are not to be polled, the AP may not allocate an uplink resource or downlink resource for the sensing measurement to the station in the sensing measurement stage. If the station is not to be polled and does not indicate this to the AP, the AP may still poll the station to allocate the uplink resource or downlink resource for the sensing measurement to the station, resulting in a waste of network resources.

Therefore, in an embodiment of the present disclosure, the AP receives the first radio frame during the sensing measurement setup or sensing session setup process, and the first radio frame indicates whether or not the AP is to be polled, in order to improve the TB sensing measurement mechanism.

Optionally, the first radio frame may be a probe request frame, a pre-associated security negotiation (PASN) request frame or a sensing by proxy (SBP) request frame.

The first indication information may be indicated by a bit, for example, setting "1" to identify that the station is to be polled, and setting "0" to identify that the station is not to be polled.

It is to be understood that even if the first indication is set to be "0", the AP may carry the STA identification for polling in the sensing polling frame.

Optionally, in a case where the station has established an association with the access point, the first indication information is carried in an extended capabilities information element, and the first radio frame may be a probe request frame.

Optionally, in a case where the station has not established an initial association with the access point, the first radio frame is a pre-associated security negotiation (PASN) request frame.

Optionally, during a sensing by proxy (SBP) process, the first indication message indicates whether or not the station is to be polled during the SBP process.

An embodiment of the present disclosure provides an information indicating method, optionally the method may be applied to a network device, the network device may be an access point, and the method may include steps of:
sending a second radio frame during a sensing measurement setup process, wherein the second radio frame includes second indication information, and the second indication information indicates the station to send the first indication information to the access point; and
receiving a first radio frame, wherein the first radio frame includes first indication information, and the first indication information indicates whether or not a station is to be polled during a sensing measurement process.

The WLAN sensing architecture applied by the information indicating method provided by the embodiment of the present disclosure and the WLAN sensing process thereof may refer to the above first example, which is not repeated herein.

A polling process is performed based on the first indication information.

During the sensing measurement setup process, the AP may pre-indicate the station in the second radio frame to inform the AP regarding whether or not the station is to be polled, i.e., indicate, via the second indication information, the station to send the first indication information. For example, if the second indication information is 1, the station sends the first indication information; and if the second indication information is 0, the station does not send the first indication information.

When the station receives the second indication information and the second indication information indicates the station to send the first indication information to the access point, the station determines the first radio frame and carries the first indication information in the first radio frame and sends the same to the AP, and the AP performs the polling process based on the first indication information.

Optionally, in an embodiment of the present disclosure, the first indication information is carried in a sensing measurement setup parameter information element of the first radio frame; and/or the second indication information is carried in a sensing measurement setup parameter information element of the second radio frame.

In an optional embodiment, the first radio frame includes a sensing measurement setup response frame; and/or the second radio frame includes a sensing measurement setup request frame.

Optionally, in an embodiment of the present disclosure, the first radio frame includes a sensing measurement setup query frame, and the first indication information may be indicated by a bit, for example, setting "1" to identify that the station is to be polled, and setting "0" to identify that the station is not to be polled.

In the embodiments of the present disclosure, the first radio frame is received; in which the first radio frame includes the first indication information, and the first indication information indicates whether or not the station is to be polled during the sensing measurement process. It does not need to poll the station which does not need to be polled, which saves network resources.

Referring to FIG. 8, based on the same principle as the method provided by the embodiments of the present disclosure, an embodiment of the present disclosure also provides an electronic device which is a station, and the electronic device includes:
a determining module 801, configured to determine a first radio frame, wherein the first radio frame includes first indication information, and the first indication information indicates whether or not the station is to be polled during a sensing measurement process; and
a sending module 802, configured to send the first radio frame.

Optionally, in an embodiment of the present disclosure, the determining module 801 is configured to:
carry the first indication information in an extended capabilities information element in a case where the station has not established an association with an access point.

Optionally, in an embodiment of the present disclosure, the first radio frame includes a probe request frame.

Optionally, in an embodiment of the present disclosure, the sending module 802 is configured to:
send the first radio frame during a pre-associated security negotiation process in a case where the station has not established an initial association with an access point.

Optionally, in an embodiment of the present disclosure, the first radio frame includes a pre-associated security negotiation request frame.

Optionally, in an embodiment of the present disclosure, the first radio frame includes a sensing measurement setup query frame.

Optionally, in an embodiment of the present disclosure, the sensing measurement process includes a sensing by proxy (SBP) process.

Optionally, in an embodiment of the present disclosure, the first radio frame includes an SBP request frame.

Optionally, in an embodiment of the present disclosure, the access point further includes:
an information receiving module, configured to receive a second radio frame during a sensing measurement setup process, wherein the second radio frame includes second indication information, and the second indication information indicates the station to send the first indication information to an access point.

Optionally, in an embodiment of the present disclosure, the first indication information is carried in a sensing measurement setup parameter information element of the first radio frame; and/or

the second indication information is carried in a sensing measurement setup parameter information element of the second radio frame.

Optionally, in an embodiment of the present disclosure, the first radio frame includes a sensing measurement setup response frame; and/or
the second radio frame includes a sensing measurement setup request frame.

In the embodiments of the present disclosure, the determining module 801 determines a first radio frame, in which the first radio frame includes first indication information, and the first indication information indicates whether or not the station is to be polled during a sensing measurement process; and the sending module 802 sends the first radio frame to indicate to an AP whether or not the station is to be polled. It does not need to poll the station which does not need to be polled, which saves network resources.

An embodiment of the present disclosure further provides an information indicating device applied to a station, and the device includes:
a radio frame determining module, configured to determine a first radio frame, wherein the first radio frame includes first indication information, and the first indication information indicates whether or not the station is to be polled during a sensing measurement process; and
a radio frame sending module, configured to send the first radio frame.

The device further includes other modules of the electronic device in the above embodiments, which is not repeated herein.

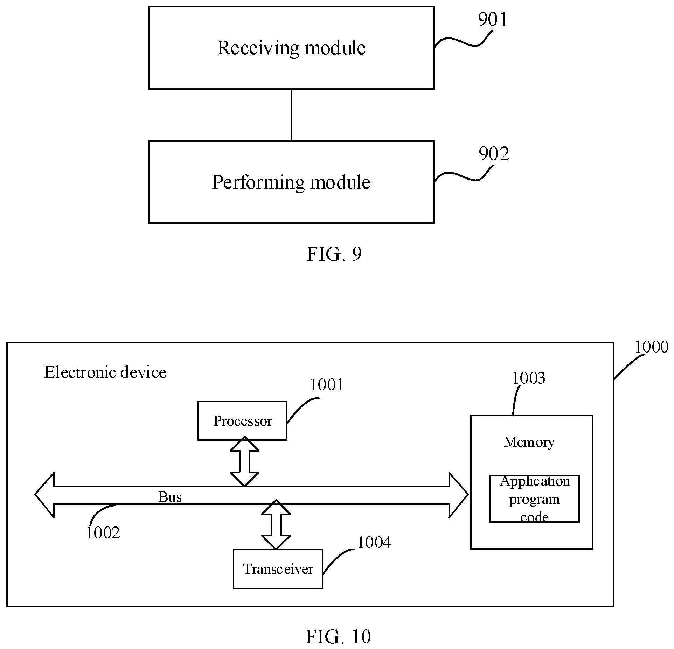

Referring to FIG. 9, based on the same principle as the method provided by the embodiments of the present disclosure, an embodiment of the present disclosure also provides an electronic device which is an access point, and the electronic device includes:
a receiving module 901, configured to receive a first radio frame, wherein the first radio frame includes first indication information, and the first indication information indicates whether or not a station is to be polled during a sensing measurement process; and
a performing module 902, configured to perform a polling process based on the first indication information.

Optionally, in an embodiment of the present disclosure, the electronic device includes:
an indication sending module, configured to send a second radio frame during a sensing measurement setup process, wherein the second radio frame includes second indication information, and the second indication information indicates the station to send the first indication information to the access point.

In the embodiments of the present disclosure, the receiving module 901 receives the first radio frame, in which the first radio frame includes the first indication information, and the first indication information indicates whether or not a station is to be polled during a sensing measurement process; and the performing module 902 does not perform the polling process on the station which does not need to be polled, which saves network resources.

An embodiment of the present disclosure also provides an information indicating device applied to an access point device, and the device includes:
a radio frame receiving module, configured to receive a first radio frame, wherein the first radio frame includes first indication information, and the first indication information indicates whether or not a station is to be polled during a sensing measurement process; and
a poll performing module, configured to perform a polling process based on the first indication information.

The device also includes other modules of the electronic device in the above embodiments, which is not repeated herein.

In an optional embodiment, an embodiment of the present disclosure further provides an electronic device, and as shown in FIG. 10, the electronic device 1000 shown in FIG. 10 may be a server, which includes a processor 1001 and a memory 1003. The processor 1001 and the memory 1003 are connected, e.g., via a bus 1002. Optionally, the electronic device 1000 may also include a transceiver 1004. It is to be noted that in practical application, the number of the transceiver 1004 is not limited to one, and the structure of the electronic device 1000 does not limit the embodiments of the present disclosure.

The processor 1001 may be a CPU (Central Processing Unit), a general-purpose processor, a DSP (Digital Signal Processor), an ASIC (Application Specific Integrated Circuit), FPGA (Field Programmable Gate Array) or other programmable logic device, a transistor logic device, a hardware component, or any combination thereof. It may implement or execute various exemplary logic blocks, modules, and circuits described in conjunction with the present disclosure. The processor 1001 may also be a combination that implements computing functions, such as a combination including one or more microprocessor, a combination of a DSP and a microprocessor, and the like.

The bus 1002 may include a path for transferring information between the components described above. The bus 1002 may be a PCI (Peripheral Component Interconnect) bus, an EISA (Extended Industry Standard Architecture) bus or the like. The bus 1002 may be divided into an address bus, a data bus, a control bus or the like. For ease of representation, only one thick line is shown in FIG. 10, which however does not mean that there is only one bus or one type of bus.

The memory 1003 may be a ROM (Read Only Memory) or other type of static memory device that can store static information and instructions, and a RAM (Random Access Memory) or other type of dynamic memory device that can store information and instructions, or may also be an EEPROM (Electrically Erasable Programmable Read Only Memory), CD-ROM (Compact Disc Read Only Memory) or other optical disk storage, optical disc storage (including compressed optical discs, laser discs, compact discs, digital general purpose discs, Blu-ray discs, etc.), magnetic disk storage media, other magnetic storage devices, or any other media capable of carrying or storing expected program codes having instruction or data structure form and capable of being accessed by a computer, which is not specifically limited herein.

The memory 1003 is used to store application program codes for executing the solution of the present disclosure and is controlled and executed by processor 1001. The processor 1001 is used to execute the application program codes stored in the memory 1003 to implement that shown in the above method embodiments.

The electronic device includes, but is not limited to: a mobile terminal such as a mobile phone, a laptop computer, a digital broadcast receiver, a PDA (personal digital assistant), a PAD (portable Android device), a PMP (portable multimedia player), an in-vehicle terminal (such as in-vehicle navigation terminal), or the like; and a fixed terminal such as a digital TV, a desktop computer, or the like. The electronic device shown in FIG. 10 is merely an example and should not impose any limitation on the functionality and application scope of the embodiments of the present disclosure.

The server provided in the present disclosure may be a standalone physical server, may be a server cluster or a distributed system formed by a plurality of physical servers, or may also be a cloud server providing basic cloud computing services such as cloud services, cloud databases, cloud computation, cloud functions, cloud storage, network services, cloud communications, middleware services, domain name services, security services, CDNs, and big data and artificial intelligence platforms. The terminals may be smartphones, tablets, laptops, desktop computers, smart speakers, smart watches, and the like, but are not limited thereto. The terminal and the server may be connected directly or indirectly via wired or wireless communication, which is not limited in the present disclosure.

An embodiment of the present disclosure provides a computer-readable storage medium having a computer program stored thereon which, when runs on a computer, enables the computer to execute that in the above method embodiments.

It is to be understood that although the individual steps in the flowchart of the accompanying drawings are shown in sequence as indicated by the arrows, the steps are not necessarily executed sequentially in the order indicated by the arrows. Unless expressly stated herein, the execution of these steps is not strictly limited in order, and they may be executed in other orders. Moreover, at least a portion of the steps in the flowchart of the accompanying drawings may include a plurality of sub-steps or a plurality of phases, which are not necessarily executed or completed at the same moment but may be executed at different moments, and they may not be executed sequentially, but may be executed in turn or alternately with the other steps or at least a portion of sub-steps or phases of the other steps.

It is to be noted that the computer-readable medium described above in the present disclosure may be a computer-readable signal medium or a computer-readable storage medium or any combination thereof. The computer-readable storage medium may be but is not limited to for example a system, device, or element of electricity, magnetism, light, electromagnetism, infrared ray, or semiconductor, or any combination thereof. More specific examples of the computer-readable storage media may include, but are not limited to: an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program that may be used by or in combination with an instruction-executing system, device, or element. And in the present disclosure, the computer-readable signal medium may include a data signal propagated in a baseband or as part of a carrier carrying computer-readable program code. Such propagated data signals may take a variety of forms, including, but not limited to, electromagnetic signals, optical signals, or any suitable combination thereof. The computer-readable signal medium may also be any computer-readable medium other than the computer-readable storage medium that may send, propagate, or transmit a program for use by or in conjunction with an instruction-executing system, device, or element. The program code contained on the computer-readable medium may be transmitted using any suitable medium, including, but not limited to: wire, optical cable, RF (Radio Frequency), or the like, or any suitable combination thereof.

The above computer-readable medium may be contained in the above electronic device; or may exist separately and not be assembled into the electronic device.

The above computer-readable medium carries one or more programs that, when being executed by the electronic device, cause the electronic device to perform the method in the above embodiments.

According to an aspect of the present disclosure, there is provided a computer program product or computer program including computer instructions which are stored in a computer-readable storage medium. A processor of a computer device reads the computer instructions from the computer-readable storage medium, and the processor executes the computer instructions such that the computer device performs the method provided in the various optional implementations described above.

The computer program code for performing the operations of the present disclosure may be written in one or more programming languages or combinations thereof, including object-oriented programming languages - such as Java, Smalltalk, C++ - and conventional procedural programming languages - such as the 'C' language or similar programming languages. The program code may be executed entirely on a user computer, executed partially on the user computer, executed as a stand-alone software package, executed partially on the user computer and partially on a remote computer, or executed entirely on a remote computer or server. In the case of the remote computer, the remote computer may be connected to the user computer via any kind of network, including a local area network (LAN) or a wide area network (WAN), or may be connected to an external computer (e.g., by using the Internet of an Internet service provider).

The flowcharts and block diagrams in the accompanying drawings illustrate the system architecture, functionality, and operation that may be implemented by the systems, methods, and computer program products according to various embodiments of the present disclosure. In this regard, each block in the flowcharts or block diagrams may represent a module, program segment, or portion of code that contains one or more executable instructions for implementing a specified logical function. It is also to be noted that in some alternative implementations, the functions indicated in the blocks may also occur in a different order than that indicated in the accompanying drawings. For example, two consecutively represented blocks may actually be executed substantially in parallel, and they may sometimes be executed in a reverse order, depending on the function involved. It is also to be noted that each block in the block diagrams and/or flowcharts, and a combination of the blocks in the block diagrams and/or flowcharts, may be implemented with a dedicated hardware-based system that performs a specified function or operation, or may be implemented with a combination of dedicated hardware and computer instructions.

The modules involved in the description of the embodiments of the present disclosure may be implemented by way of software or may be implemented by way of hardware. The name of a module does not constitute a limitation on the module in some cases, for example, a module A may also be described as "a module A for performing an operation B".

The above description is only a preferred embodiment of the present disclosure and an illustration of the technical principle applied. A person skilled in the art should understand that the scope of the present disclosure is not limited to a technical solution formed by a particular combination of the above-described technical features, but also covers other technical solutions formed by any combination of the above-described technical features or their equivalents without departing from the above-described concept of the present disclosure, for example, a technical solution formed by replacing the above features with technical features having similar functions to that disclosed in the present disclosure (which however not limited thereto).

## Claims

1. An information indicating method applied to a station, comprising:
determining a first radio frame, wherein the first radio frame comprises first indication information, and the first indication information indicates whether or not the station is to be polled during a sensing measurement process; and
sending the first radio frame.

2. The information indicating method according to claim 1, wherein determining the first radio frame comprises:
determining the first radio frame in a case where the station has established an association with an access point, wherein the first indication information is carried in an extended capabilities information element.

3. The information indicating method according to claim 2, wherein the first radio frame comprises a probe request frame.

4. The information indicating method according to claim 1, wherein sending the first radio frame comprises:
sending the first radio frame during a pre-associated security negotiation process in a case where the station has not established an initial association with an access point.

5. The information indicating method according to claim 4, wherein the first radio frame comprises a pre-associated security negotiation request frame.

6. The information indicating method according to claim 1, wherein the first radio frame comprises a sensing measurement setup query frame.

7. The information indicating method according to any one of claims 1 to 6, wherein the sensing measurement process comprises a sensing by proxy, SBP, process.

8. The information indicating method according to claim 7, wherein the first radio frame comprises an SBP request frame.

9. The information indicating method according to claim 1, further comprising:
receiving a second radio frame during a sensing measurement setup process, wherein the second radio frame comprises second indication information, and the second indication information indicates the station to send the first indication information to an access point.

10. The information indicating method according to claim 9, wherein
the first indication information is carried in a sensing measurement setup parameter information element of the first radio frame; and/or
the second indication information is carried in a sensing measurement setup parameter information element of the second radio frame.

11. The information indicating method according to claim 9, wherein
the first radio frame comprises a sensing measurement setup response frame; and/or
the second radio frame comprises a sensing measurement setup request frame.

12. An information indicating method applied to an access point, comprising:
receiving a first radio frame, wherein the first radio frame comprises first indication information, and the first indication information indicates whether or not a station is to be polled during a sensing measurement process; and
performing a polling process based on the first indication information.

13. The information indicating method according to claim 12, further comprising:
sending a second radio frame during a sensing measurement setup process, wherein the second radio frame comprises second indication information, and the second indication information indicates the station to send the first indication information to the access point.

14. An electronic device being a station, comprising:
a determining module, configured to determine a first radio frame, wherein the first radio frame comprises first indication information, and the first indication information indicates whether or not the station is to be polled during a sensing measurement process; and
a sending module, configured to send the first radio frame.

15. An electronic device being an access point, comprising:
a receiving module, configured to receive a first radio frame, wherein the first radio frame comprises first indication information, and the first indication information indicates whether or not a station is to be polled during a sensing measurement process; and
a performing module, configured to perform a polling process based on the first indication information.

16. An electronic device, comprising a memory, a processor and a computer program stored in the memory and runnable on the processor, wherein the processor, when executing the program, implements the method according to any one of claims 1 to 13.

17. A computer-readable storage medium having a computer program stored thereon, wherein the computer program, when being executed by a processor, implements the method according to any one of claims 1 to 13.
